(19) **Europäisches Patentamt**
**European Patent Office**
**Office européen des brevets**

(11) **EP 4 631 925 A1**

(12) **EUROPEAN PATENT APPLICATION**
published in accordance with Art. 153(4) EPC

(43) Date of publication:
**15.10.2025 Bulletin 2025/42**

(21) Application number: **23921297.0**

(22) Date of filing: **14.11.2023**

(51) International Patent Classification (IPC):
*C04B 28/02* (2006.01)  *C04B 16/02* (2006.01)
*C04B 18/14* (2006.01)  *C04B 18/16* (2023.01)
*C04B 18/20* (2006.01)  *C04B 22/06* (2006.01)
*C04B 22/08* (2006.01)

(52) Cooperative Patent Classification (CPC):
**C04B 16/02; C04B 18/14; C04B 18/16;
C04B 18/20; C04B 22/06; C04B 22/08;
C04B 28/02; Y02W 30/91**

(86) International application number:
**PCT/JP2023/040880**

(87) International publication number:
**WO 2024/166476 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.02.2023 JP 2023016777**

(71) Applicant: **JFE Steel Corporation
Tokyo 100-0011 (JP)**

(72) Inventors:
• **HOSHINO, Takeru
Tokyo 100-0011 (JP)**
• **MATSUNAGA, Hisahiro
Tokyo 100-0011 (JP)**

(74) Representative: **Hoffmann Eitle
Patent- und Rechtsanwälte PartmbB
Arabellastraße 30
81925 München (DE)**

(54) **SOLIDIFIED BODY, ROADBED MATERIAL, AND METHOD FOR PRODUCING SOLIDIFIED BODY**

(57)  [Object] To provide a solidified body and a method for manufacturing a solidified body which can fix $CO_2$ without performing a deaeration process and a carbonation process in an airtight container.

[Solution] A solidified body includes: a binder; at least one of a carbonated steelmaking slag, a wood material, a synthetic resin, and natural fibers; and water, wherein the content of the at least one of a carbonated steelmaking slag, a wood material, a synthetic resin, and natural fibers is not less than 1 mass % and not more than 90 mass %.

**EP 4 631 925 A1**

**Description**

Technical Field

The present invention relates to a solidified body, a roadbed material, and a method for manufacturing a solidified body.

Background Art

Various decarbonization techniques are being studied for carbon neutrality. Among them, carbonate and concrete-related techniques using $CO_2$ are easier to put into practical use than other techniques using $CO_2$, and have a high potential for $CO_2$ fixation. Patent Literature 1 discloses a method for manufacturing a carbonated solidified body of steel slag using steelmaking slag and $CO_2$ as raw materials.

Citation List

Patent Literature

PTL 1: Japanese Patent No. 5263190

Summary of Invention

Technical Problem

The method disclosed in Patent Literature 1 comprises a carbonation process which involves deaerating the interior of an airtight container, and then supplying carbon dioxide gas into the container to cause a carbonation reaction in an uncarbonated Ca-containing raw material as a preform. The carbonation process is performed for a long period of time and thus has the problem of heavy burden. The carbonation process also has a problem that it is difficult to entirely carbonate the inside of the solidified body. The present invention has been made in view of such problems. It is therefore an object of the present invention to provide a solidified body which can fix $CO_2$ without performing a deaeration process and a carbonation process in an airtight container, a roadbed material comprising the solidified body, and a method for manufacturing a solidified body. Solution to Problem

The present invention provides the following embodiments to solve the above problems.

[1] A solidified body comprising: a binder; at least one of a carbonated steelmaking slag, a wood material, a synthetic resin, and natural fibers; and water, wherein the content of the at least one of a carbonated steelmaking slag, a wood material, a synthetic resin, and natural fibers is not less than 1 mass % and not more than 90 mass %.

[2] The solidified body according to [1], wherein the carbonated steelmaking slag is a fine powder of carbonated steelmaking slag having a particle size of 1 mm or less, and wherein the content of a carbonate in the fine powder of carbonated steelmaking slag is 1 mass % or more.

[3] The solidified body according to [1] or [2], wherein the wood material is at least one of wood flour, wood chips, wood wool, wood fibers, pulp, a torrefied charcoal, a charcoal, cellulose nanofibers, carbon nanofibers, and carbon fibers.

[4] The solidified body according to [1] or [2], wherein the wood material contains at least one of a torrefied charcoal and a charcoal, and wherein the content of the at least one of a torrefied charcoal and a charcoal in the wood material is 1 mass % or more.

[5] The solidified body according to any one of [1] to [4], wherein the binder is at least one of a fine powder of blast furnace slag, a fine powder of steelmaking slag, a vitreous aluminosilicate, hydrated lime, cement, and waste concrete.

[6] The solidified body according to [5], wherein the fine powder of steelmaking slag is at least one of converter slag, secondary refining slag, molten iron pretreatment slag, and electric arc furnace slag.

[7] The solidified body according to [5], wherein the vitreous aluminosilicate is at least one of fly ash, volcanic ash, and silica fume.

[8] The solidified body according to any one of [1] to [7], wherein the water is at least one of fresh water, salt water, seawater, hot spring water, and an aqueous sodium hydroxide solution.

[9] A roadbed material comprising the solidified body according to [1] in an amount of 1 mass % or more.

[10] A method for manufacturing a solidified body, comprising: a kneading step of kneading a binder, at least one of a carbonated steelmaking slag, a wood material, a synthetic resin, and natural fibers, and water to form a mixture; and a solidification step of molding and solidifying the mixture, wherein in the kneading step, the materials are mixed and kneaded such that the content of the at least one of a carbonated steelmaking slag, a wood material, a synthetic resin, and natural fibers is not less than 1 mass % and not more than 90 mass %.

[11] The method for manufacturing a solidified body according to [10], wherein in the kneading step, the materials are mixed and kneaded such that the mass ratio of the water to the binder is not less than 0.1 and not more than 0.7.

According to the present invention, a solidified body is manufactured by solidifying, with a hydrate, a binder and a raw material capable of fixing carbon. Thus, the solidified body according to the present invention can fix $CO_2$ without a deaeration process and a carbonation process in an airtight container. The use of such a method makes it possible to easily produce a solidified body in which a large amount of $CO_2$ is fixed. This contributes to the realization of carbon neutrality.

Description of Embodiments

[Embodiment 1]

The present invention will now be described through embodiments of the present invention. The solidified body according to the present embodiments is obtained through replacement of a part of a binder with a $CO_2$-containing material, and mixing of the materials with water. Thus, $CO_2$ is fixed in the resulting solidified body. A solidified body according to embodiment 1, which comprises a binder, a carbonated steelmaking slag, and water, will be described.

A method for manufacturing a solidified body according to embodiment 1 is described. First, a binder, a carbonated steelmaking slag, and water, which are raw materials for a solidified body, are kneaded to form a mixture. This process is a kneading step. Subsequently, the mixture of the binder, the carbonated steelmaking slag, and water is molded into a predetermined shape, and the molded product is cured in air, in a humid atmosphere, or in water for at least one day to solidify the molded product through a hydration reaction. This process is a solidification step. By thus solidifying the raw materials through a hydration reaction, a solidified body in which $CO_2$ is fixed can be manufactured. The solidified body can be used, for example, as a seawall material, a foot protection material, a fish bed, a wall material, a sand compaction pile material, a calcia modifier, a roadbed material, or an aggregate.

The binder is a material that functions to bind particles together and solidify them through a hydration reaction. The binder is, for example, at least one of a fine powder of blast furnace slag, a fine powder of steelmaking slag, a vitreous aluminosilicate, hydrated lime, cement, and waste concrete. The fine powder of blast furnace slag and the fine powder of steelmaking slag may have a particle size of 1 mm or less. A particle size of 1 mm or less refers to the particle size of particles that pass through a sieve having a mesh opening size of 1 mm.

The binder is mixed with the other materials such that the content of the binder in the solidified body is not less than 10 mass % and not more than 99 mass %. The fine powder of steelmaking slag for use as the binder is, for example, at least one of converter slag, secondary refining slag, molten iron pretreatment slag, and electric arc furnace slag. The vitreous aluminosilicate for use as the binder is, for example, at least one of fly ash, volcanic ash, and silica fume. Examples of the chemical compositions of such materials are shown in Table 1 below.

[Table 1]

|  | CaO | $SiO_2$ | $Al_2O_3$ | MgO | MnO | T-Fe | $P_2O_5$ |
|---|---|---|---|---|---|---|---|
| Converter slag | 47.9 | 12.1 | 4.2 | 5.7 | 2.7 | 18.6 | 2.5 |
| Secondary refining slag | 42.5 | 13.4 | 21.8 | 5.1 | 6.3 | 5.2 | 1.8 |
| Molten iron pretreatment slag | 26.0 | 24.2 | 3.1 | 1.3 | 3.6 | 29.2 | 2.7 |
| Fly ash | 3.7 | 58.4 | 23.2 | 0.8 | 0.0 | 4.1 | 0.0 |
| Volcanic ash | 1.1 | 75.0 | 12.1 | 0.2 | 0.0 | 1.0 | 0.0 |
| Silica fume | 0.0 | 96.5 | 0.3 | 0.0 | 0.0 | 0.2 | 0.0 |
| unit: mass % | | | | | | | |

The water is, for example, at least one of fresh water, salt water, seawater, hot spring water, and an aqueous sodium hydroxide solution. While the water is not particularly limited as long as it contains moisture, the use of salt water or seawater containing chloride ions, hot spring water containing sulfate ions, thiosulfate ions, or chloride ions, or a high-pH aqueous sodium hydroxide solution containing sodium ions promotes an increase in the strength of the mixture obtained by the kneading, thereby increasing the strength of the solidified body. The use of hot spring water containing carbonate ions increases the amount of $CO_2$ fixed in the solidified body. Examples of the components of such waters are shown in Table 2 below.

[Table 2]

| | Na$^+$ | K$^+$ | Mg$^{2+}$ | Ca$^{2+}$ | Cl$^-$ | SO$_4{}^{2-}$ | HCO$_3{}^-$ |
|---|---|---|---|---|---|---|---|
| Fresh water | 0.0 | 0.00 | 0.0 | 0.0 | 0.0 | 0.0 | 0.0 |
| Salt water | 3934.0 | 0.00 | 0.0 | 0.0 | 6066.0 | 0.0 | 0.0 |
| Seawater | 10556.0 | 380.00 | 1272.0 | 400.0 | 18980.0 | 2649.0 | 140.0 |
| Hot spring water | 95.5 | 3.42 | 0.2 | 278.0 | 113.0 | 699.0 | 15.3 |
| Hot spring water containing carbonate ions | 55.4 | 6.00 | 41.7 | 245.2 | 6.9 | 0.7 | 1135.0 |
| unit: mg/kg | | | | | | | |

The water-binder ratio, which indicates the mass ratio of water to the binder (mass of water/mass of binder) during kneading, is preferably not less than 0.1 and not more than 0.7. If the water-binder ratio during kneading is less than 0.1, the fluidity of the mixture obtained in the kneading step will be undesirably low. On the other hand, if the water-binder ratio during kneading is more than 0.7, the time required to increase the strength of the solidified body will be undesirably long in the solidification step, or the strength of the solidified body will be undesirably low.

The carbonated steelmaking slag is mixed with the other materials such that the content of the carbonated steelmaking slag in the solidified body is not less than 1 mass % and not more than 90 mass %. If the content of the carbonated steelmaking slag is less than 1 mass %, the amount of CO$_2$ fixed in the solidified body will be undesirably small. On the other hand, if the content of the carbonated steelmaking slag is more than 90 mass %, the small amount of the binder will undesirably reduce the strength of the solidified body. The carbonated steelmaking slag can be produced by adding steam to a steelmaking slag, and introducing a CO$_2$-containing gas into the slag to carry out a carbonation treatment for one day. Instead of adding steam to a steelmaking slag, the steelmaking slag may be held in water, and a CO$_2$-containing gas may be introduced into the water to carry out a carbonation treatment of the slag for one day, thereby producing the carbonated steelmaking slag. The CO$_2$-containing gas to be introduced may have a CO$_2$ concentration of 10% by volume or more. The CO$_2$-containing gas may be exhaust gas having a CO$_2$ concentration of 10% by volume or more discharged from a manufacturing process facility in a steel plant.

A fine powder of steelmaking slag having a particle size of 1 mm or less is preferably used as a steelmaking slag for the carbonated steelmaking slag. A particle size of 1 mm or less refers to the particle size of particles that pass through a sieve having a mesh opening size of 1 **mm.** The use of the fine powder of steelmaking slag having a particle size of 1 mm or less can achieve a reaction promotion effect due to the increase in reaction interface area during the carbonation treatment, resulting in an increase in the amount of CO$_2$ fixed in the carbonated steelmaking slag. The use of the fine powder of the carbonated steelmaking slag having a particle size of 1 mm or less, because of its large specific surface area, promotes the supply of alkali in the solidification step, resulting in an increase in the strength of the solidified body.

The carbonated steelmaking slag, which has undergone the carbonation treatment, contains a carbonate. The carbonate may be, for example, any one of calcium carbonate, calcium carbonate hydrate, magnesium carbonate, and magnesium carbonate hydrate. The carbonation treatment of steelmaking slag is preferably performed such that the content of the carbonate in the carbonated steelmaking slag is 1 mass % or more. A high content of the carbonate, which contains CO$_2$, means that the corresponding large amount of CO$_2$ is fixed in the solidified body. Thus, the use of a carbonated steelmaking slag having a carbonate content of 1 mass % or more as a raw material for the solidified body increases the amount of CO$_2$ fixed in the solidified body. The higher the carbonate content in the carbonated steelmaking slag, the more the amount of CO$_2$ fixed in the solidified body; therefore, there is no need to place an upper limit on the carbonate content.

By thus replacing a part of the binder of a solidified body with a carbonated steelmaking slag, it is possible to manufacture a solidified body in which CO$_2$ is fixed. Since the solidified body according to embodiment 1 can be manufactured by solidifying a binder and a carbonated steelmaking slag with a hydrate, the solidified body can be manufactured without performing a deaeration process and a carbonation process in an airtight container. Further, unlike calcium carbonate and biochar which are CO$_2$-fixing materials and produce a component other than Ca or an ash component residue, the solidified body manufactured using a carbonated steelmaking slag can avoid the production of such a residue.

[Embodiment 2]

A solidified body according to embodiment 2, which comprises a binder, a wood material and water, will now be described. The binder and the water are the same as those of embodiment 1, and therefore a description thereof will be omitted.

A method for producing a solidified body according to embodiment 2 is described. First, a binder, a wood material which has been crushed to a size of 4.75 mm or less, and water, which are raw materials for a solidified body, are kneaded to form a mixture. This process is a kneading step. The wood material having a size of 4.75 mm or less refers to a crushed wood material that passes through a sieve having a mesh opening size of 4.75 mm. Subsequently, the mixture of the binder, the wood material, and water is molded into a predetermined shape, and the molded product is cured in air, in a humid atmosphere, or in water for at least one day to solidify the molded product through a hydration reaction. This process is a solidification step. By thus solidifying the raw materials through a hydration reaction, a solidified body in which $CO_2$ is fixed can be manufactured.

The wood material is mixed with the other materials such that the content of the wood material in the solidified body is not less than 1 mass % and not more than 90 mass %. The wood material is, for example, one of wood flour, wood chips, wood wool, wood fibers, pulp, a torrefied charcoal, a charcoal, cellulose nanofibers, carbon nanofibers, and carbon fibers. $CO_2$ can be fixed in the solidified body by using the wood material as a raw material for the solidified body. The specific gravity of the solidified body to be manufactured can be adjusted by changing the proportion of the raw wood materials used. A high-specific gravity solidified body can be used as artificial stones placed in the sea. A high-specific gravity solidified body can make artificial stones having excellent wave stability. A low-specific gravity solidified body can be used as a seawall material, an external wall material, or a fish bed. The use of a low-specific gravity solidified body facilitates construction work, enabling a reduction in the period of seawall construction or exterior wall construction.

Wood materials have high water absorption. Therefore, the use of a wood material as a raw material for the solidified body can reduce heat generation during a hydration reaction in the solidification step, thereby reducing the occurrence of cracks in the solidified body manufactured. Further, the use of a wood material as a raw material for the solidified body can also reduce drying shrinkage of the solidified body. This makes it possible to manufacture a solidified body which has excellent heat insulation, sound insulation, and fire resistance, has a moisture conditioning effect, and is excellent in biocompatibility.

The wood material preferably contains at least one of a torrefied charcoal and a charcoal. The torrefied charcoal or the charcoal functions as an adsorbent; it adsorbs lye which may be contained in a low-cost wood material and causes a delay in the solidification of the solidified body. Therefore, the use of a torrefied charcoal or a charcoal makes it possible to manufacture the solidified body using a low-cost wood material. The torrefied charcoal can be produced by heating a wood material at a temperature of not less than 200°C and less than 300°C in an oxygen-free or low-oxygen reducing atmosphere. The charcoal can be produced by heating a wood material at a temperature of not less than 300°C and not more than 1000°C in an oxygen-free or low-oxygen reducing atmosphere.

The content of the at least one of a torrefied charcoal and a charcoal in the wood material is preferably 1 mass % or more. If the content of the at least one of a torrefied charcoal and a charcoal is less than 1 mass %, the solidification delay reduction effect cannot be achieved, making it impossible to use a low-cost wood material. The higher the content of the torrefied charcoal and/or the charcoal, the greater the solidification delay reduction effect. Therefore, there is no need to place an upper limit on the content of the torrefied charcoal and/or the charcoal.

A solidified body in which $CO_2$ is fixed can also be manufactured by thus using a wood material instead of a carbonated steelmaking slag. Since the solidified body according to embodiment 2 can be manufactured by solidifying a binder and a wood material with a hydrate, the solidified body can be manufactured without performing a deaeration process and a carbonation process in an airtight container.

[Embodiment 3]

A solidified body according to embodiment 3, which comprises a binder, a synthetic resin and water, will now be described. The binder and the water are the same as those of embodiment 1, and therefore a description thereof will be omitted.

A binder, a synthetic resin which has been crushed to a size of 4.75 mm or less, and water, which are raw materials for a solidified body, are kneaded to form a mixture. This process is a kneading step. The synthetic resin having a size of 4.75 mm or less refers to a crushed synthetic resin that passes through a sieve having a mesh opening size of 4.75 mm. Subsequently, the mixture of the binder, the synthetic resin, and water is molded into a predetermined shape, and the molded product is cured in air, in a humid atmosphere, or in water for at least one day to solidify the molded product through a hydration reaction. This process is a solidification step. A solidified body according to embodiment 3 can be manufactured by thus solidifying the raw materials through a hydration reaction.

The synthetic resin is mixed with the other materials such that the content of the synthetic resin in the solidified body is not less than 1 mass % and not more than 90 mass %. The synthetic resin is, for example, one of waste synthetic rubber, waste tire, waste polystyrene foam, waste polyvinyl chloride, waste polyethylene, waste polystyrene, and waste synthetic fibers, which are solid synthetic polymer compounds. It is preferred to use, as the synthetic resin, a waste plastic material such as waste polystyrene foam, waste polyvinyl chloride, waste polyethylene, waste polystyrene, and waste synthetic fibers. The use of a synthetic resin as a raw material for the solidified body enhances the heat insulation properties of the solidified body. In addition, the use of a synthetic resin makes it possible to manufacture a lightweight solidified body or a solidified body having an elasticity.

A solidified body in which $CO_2$ is fixed can also be manufactured by thus using a synthetic resin instead of a carbonated steelmaking slag. Since the solidified body according to embodiment 3 can be manufactured by solidifying a binder and a synthetic resin with a hydrate, the solidified body can be manufactured without performing a deaeration process and a carbonation process in an airtight container.

[Embodiment 4]

A solidified body according to embodiment 4, which comprises a binder, natural fibers and water, will now be described. The binder and the water are the same as those of embodiment 1, and therefore a description thereof will be omitted.

A binder, natural fibers which have been cut to a size of 4.75 mm or less, and water, which are raw materials for a solidified body, are kneaded to form a mixture. This process is a kneading step. Subsequently, the mixture of the binder, the natural fibers, and water is molded into a predetermined shape, and the molded product is cured in air, in a humid atmosphere, or in water for at least one day to solidify the molded product through a hydration reaction. This process is a solidification step. A solidified body according to embodiment 4 can be manufactured by thus solidifying the raw materials through a hydration reaction.

The natural fibers are mixed with the other materials such that the content of the natural fibers in the solidified body is not less than 1 mass % and not more than 90 mass %. The natural fibers are, for example, one of plant fibers such as cotton, hemp, linen, chaff, palm shells, and banana peels; and animal fibers such as wool, cashmere, and silk. The use of natural fibers as a raw material for the solidified body increases the strength of the solidified body. In addition, the use of natural fibers makes it possible to manufacture a lightweight solidified body or a solidified body having an elasticity.

A solidified body in which $CO_2$ is fixed can also be manufactured by thus using natural fibers instead of a carbonated steelmaking slag. Since the solidified body according to embodiment 4 can be manufactured by solidifying a binder and natural fibers with a hydrate, the solidified body can be manufactured without performing a deaeration process and a carbonation process in an airtight container.

While the example solidified bodies, each comprising a binder, one of a carbonated steelmaking slag, a wood material, a synthetic resin and natural fibers, and water, have been described in embodiments 1 to 4, the present invention is not limited to such solidified bodies. A solidified body may be manufactured using a wood material together with a carbonated steelmaking slag, using a synthetic resin together with a carbonated steelmaking slag, or using natural fibers together with a carbonated steelmaking slag. Further, a solidified body may be manufactured using a synthetic resin together with a wood material, using natural fibers together with a wood material, or using natural fibers together with a synthetic resin. Thus, the solidified body according to the present embodiments is a solidified body comprising a binder, at least one of a carbonated steelmaking slag, a wood material, a synthetic resin, and natural fibers, and water, wherein the content of the at least one of a carbonated steelmaking slag, a wood material, a synthetic resin, and natural fibers is not less than 1 mass % and not more than 90 mass %.

Further, the solidified body according to the present embodiments may be a solidified body comprising a binder, one of a carbonated steelmaking slag, a wood material, a synthetic resin, and natural fibers, water, and a fine aggregate, or a solidified body comprising a binder, one of a carbonated steelmaking slag, a wood material, a synthetic resin, and natural fibers, water, a fine aggregate, and a coarse aggregate. Such a solidified body, having $CO_2$ fixed therein, can also be manufactured without performing a deaeration process and a carbonation process in an airtight container.

$CO_2$ is fixed in a roadbed material comprising 1 mass % or more of the solidified body obtained in the present embodiments. In addition to the solidified body obtained in the present embodiments, at least one of a carbonated steelmaking slag, a wood material, a synthetic resin, and natural fibers may be mixed into the roadbed material. When the solidified body is incorporated into the roadbed material, the solidified body is crushed so that the roadbed material as a whole satisfies CS-40 specified in JIS A 5015:2018 "Iron and steel slag for road construction".

EXAMPLES

A description will now be given of examples in which solidified bodies were produced using a binder, a carbonated steelmaking slag (containing calcium carbonate as a carbonate), a wood material, a synthetic resin, natural fibers, and water at adjusted mixing ratios. A fine powder of carbonated steelmaking slag having a particle size of 1 mm or less was used as the carbonated steelmaking slag. The wood material and the synthetic resin had been crushed to a size of 4.75 mm or less using a crusher, and the natural fibers had been cut to a size of 4.75 mm or less using a cutter mill. The mixing ratios of these raw materials, the water-binder ratios, the occurrence or non-occurrence of solidification, and the amounts of fixed $CO_2$ are shown in Table 3 below. The specific materials of the binder, the fine powder of carbonated steelmaking slag, the wood material, the synthetic resin, and the natural fibers, used in Inventive Examples 1 to 17 and Comparative Examples 1 to 4, are shown in Table 4 below.

In a test room kept at a temperature of 20 $\pm$ 3°C and a relative humidity of 60% or more, 15 L of the raw materials for each solidified body, shown in Table 3, were charged into a mortar mixer with a capacity of 20 L. First, the raw materials were dry-kneaded for 30 seconds, and then water was added to the mixture, and the mixture was kneaded at 100 rpm for 90 seconds. Thereafter, the raw material mixture was filled into a cylindrical container ($\varphi$ 100 mm $\times$ 200 mm), and sealed and cured until the material age reached 7 days to produce a solidified body.

The torrefied charcoal contained in the wood material had been produced by treating wood flour having an average particle size of 1 mm at 250°C for 10 minutes using superheated steam. The charcoal contained in the wood material had been produced by treating wood flour having an average particle size of 300 $\mu$m at 300°C for 20 minutes using superheated steam. The average particle size of wood flour is a volume average diameter defined by the following formula (1).

[Math. 1]

$$\text{Volume average diameter} = \frac{\sum n_i x_i^4}{\sum n_i x_i^3} \cdots (1)$$

In the above formula (1), $x_i$ is a representative particle size (mm) in a particle size interval, and $n_i$ is the number of particles.

The solidification of a solidified body was evaluated as "o" when the compressive strength of the solidified body was 1 MPa or more, and evaluated as "$\times$" when the compressive strength of the solidified body was less than 1 MPa. The measurement of the compressive strength of a solidified body was performed in accordance with JIS A 1108:2018 "Method of test for compressive strength of concrete".

[Table 3]

| | Binder (mass %) | Fine powder of carbonated steelmaking slag (mass %) | Calcium carbonate (mass %) | Wood material (mass %) | Torrefied charcoal Charcoal (mass %) | Synthetic resin (mass %) | Natural fibers (mass %) | Water-binder ratio (-) | Solidification | Amount of fixed $CO_2$ (kg-$CO_2$/t) |
|---|---|---|---|---|---|---|---|---|---|---|
| Inventive Ex. 1 | 10 | 90 | 1 | 0 | 0 | 0 | 0 | 0.3 | ○ | 5 |
| Inventive Ex. 2 | 10 | 0 | 0 | 90 | 9 | 0 | 0 | 0.1 | ○ | 2583 |
| Inventive Ex. 3 | 20 | 80 | 30 | 0 | 0 | 0 | 0 | 0.2 | ○ | 150 |
| Inventive Ex. 4 | 30 | 0 | 0 | 70 | 30 | 0 | 0 | 0.5 | ○ | 2170 |
| Inventive Ex. 5 | 40 | 30 | 20 | 30 | 20 | 0 | 0 | 0.4 | ○ | 1080 |
| Inventive Ex. 6 | 50 | 25 | 25 | 25 | 10 | 0 | 0 | 0.6 | ○ | 895 |
| Inventive Ex. 7 | 60 | 0 | 0 | 40 | 5 | 0 | 0 | 0.7 | ○ | 1155 |
| Inventive Ex. 8 | 70 | 15 | 5 | 15 | 2 | 0 | 0 | 0.3 | ○ | 459 |
| Inventive Ex. 9 | 80 | 0 | 0 | 20 | 15 | 0 | 0 | 0.4 | ○ | 665 |
| Inventive Ex. 10 | 90 | 0 | 0 | 10 | 10 | 0 | 0 | 0.2 | ○ | 350 |
| Inventive Ex. 11 | 90 | 10 | 5 | 0 | 0 | 0 | 0 | 0.3 | ○ | 25 |
| Inventive Ex. 12 | 90 | 0 | 0 | 0 | 0 | 10 | 0 | 0.3 | ○ | 600 |
| Inventive Ex. 13 | 95 | 4 | 3 | 0 | 0 | 1 | 0 | 0.5 | ○ | 75 |
| Inventive Ex. 14 | 40 | 20 | 5 | 20 | 10 | 20 | 0 | 0.4 | ○ | 1855 |
| Inventive Ex. 15 | 10 | 0 | 0 | 0 | 0 | 0 | 90 | 0.3 | ○ | 1440 |
| Inventive Ex. 16 | 50 | 0 | 0 | 0 | 0 | 0 | 50 | 0.4 | ○ | 800 |
| Inventive Ex. 17 | 95 | 0 | 0 | 0 | 0 | 0 | 5 | 0.6 | ○ | 80 |
| Comp. Ex. 1 | 100 | 0 | 0 | 0 | 0 | 0 | 0 | 0.1 | ○ | 0 |
| Comp. Ex. 2 | 100 | 0 | 0 | 0 | 0 | 0 | 0 | 0.7 | ○ | 0 |
| Comp. Ex. 3 | 0 | 50 | 1 | 50 | 25 | 0 | 0 | 0.3 | × | 1580 |
| Comp. Ex. 4 | 0 | 50 | 1 | 50 | 0 | 0 | 0 | 0.3 | × | 1405 |

[Table 4]

| | Binder | Fine powder of carbonated steelmaking slag | Wood material | Synthetic resin | Natural fibers |
|---|---|---|---|---|---|
| Inventive Ex. 1 | Fine powder of blast furnace slag Fine powder of steelmaking slag Hydrated lime | Converter slag | - | - | - |
| Inventive Ex. 2 | Fine powder of blast furnace slag Hydrated lime | - | Wood flour Torrefied charcoal | - | - |
| Inventive Ex. 3 | Fine powder of blast furnace slag Vitreous alumino-silicate Hydrated lime | Secondary refining slag | - | - | - |
| Inventive Ex. 4 | Fine powder of blast furnace slag Hydrated lime | - | Wood wool Charcoal Torrefied charcoal | - | - |
| Inventive Ex. 5 | Waste concrete | Molten iron pretreatment slag | Wood chips Charcoal | - | - |
| Inventive Ex. 6 | Fine powder of steelmaking slag | Secondary refining slag | Wood fibers Charcoa Torrefied charcoal | - | - |
| Inventive Ex. 7 | Cement | - | Pulp Torrefied charcoal | - | - |
| Inventive Ex. 8 | Fine powder of blast furnace slag Fine powder of steelmaking slag | Electric arc furnace slag | Cellulose na-nofibers Charcoal | - | - |
| Inventive Ex. 9 | Hydrated lime | - | Wood flour Torrefied charcoal | - | - |
| Inventive Ex. 10 | Fine powder of steelmaking slag Vitreous alumino-silicate | Converter slag | Carbon nano-fibers Charcoa Torrefied charcoal | - | - |
| Inventive Ex. 11 | Fine powder of blast furnace slag Vitreous alumino-silicate | Molten iron pretreatment slag | - | - | - |
| Inventive Ex. 12 | Fine powder of blast furnace slag | - | - | Waste synthetic rubber | - |
| Inventive Ex. 13 | Fine powder of steelmaking slag | Secondary refining slag | - | Waste syn-thetic fibers | - |

(continued)

| | Binder | Fine powder of carbonated steelmaking slag | Wood material | Synthetic resin | Natural fibers |
|---|---|---|---|---|---|
| Inventive Ex. 14 | Fine powder of blast furnace slag Fine powder of steelmaking slag Hydrated lime | Converter slag | Wood flour Charcoa Torrefied charcoal | Waste tire | - |
| Inventive Ex. 15 | Cement | - | - | - | Coconut shells |
| Inventive Ex. 16 | Waste concrete | - | - | - | Chaff |
| Inventive Ex. 17 | Hydrated lime | - | - | - | Wool |
| Comp. Ex. 1 | Cement | - | - | - | - |
| Comp. Ex. 2 | Fine powder of blast furnace slag | - | - | - | - |
| Comp. Ex. 3 | - | Secondary refining slag | Carbon fibers Charcoa Torrefied charcoal | - | - |
| Comp. Ex. 4 | - | Converter slag | Wood flour | - | - |

As shown in Table 3, in any of Inventive Examples 1 to 17, the kneaded raw material mixture was hydrated and solidified, and a solidified body in which $CO_2$ was fixed could be produced. The results indicate that the solidified body according to the present embodiments can be manufactured without performing a deaeration process and a carbonation process in an airtight container. On the other hand, in each of Comparative Examples 1 and 2, the raw material mixture was hydrated and solidified, and a solidified body was produced. However, because of the non-inclusion of a fine powder of carbonated steelmaking slag, a wood material, or a synthetic resin in the raw material, the amount of $CO_2$ fixed in the solidified body was 0. Thus, a solidified body in which $CO_2$ was fixed could not be produced. In Comparative Examples 3 and 4, because of the non-inclusion of a binder in the raw materials, the raw materials did not hydrate and solidify; a solidified body could not be produced.

**Claims**

1. A solidified body comprising:

a binder;
at least one of a carbonated steelmaking slag, a wood material, a synthetic resin, and natural fibers; and
water,
wherein the content of the at least one of a carbonated steelmaking slag, a wood material, a synthetic resin, and natural fibers is not less than 1 mass % and not more than 90 mass **%.**

2. The solidified body according to claim 1, wherein the carbonated steelmaking slag is a fine powder of carbonated steelmaking slag having a particle size of 1 mm or less, and wherein the content of a carbonate in the fine powder of carbonated steelmaking slag is 1 mass % or more.

3. The solidified body according to claim 1 or 2, wherein the wood material is at least one of wood flour, wood chips, wood wool, wood fibers, pulp, a torrefied charcoal, a charcoal, cellulose nanofibers, carbon nanofibers, and carbon fibers.

4. The solidified body according to claim 1 or 2, wherein the wood material contains at least one of a torrefied charcoal and a charcoal, and wherein the content of the at least one of a torrefied charcoal and a charcoal in the wood material is 1 mass % or more.

5. The solidified body according to any one of claims 1 to 4, wherein the binder is at least one of a fine powder of blast furnace slag, a fine powder of steelmaking slag, a vitreous aluminosilicate, hydrated lime, cement, and waste concrete.

6. The solidified body according to claim 5, wherein the fine powder of steelmaking slag is at least one of converter slag, secondary refining slag, molten iron pretreatment slag, and electric arc furnace slag.

7. The solidified body according to claim 5, wherein the vitreous aluminosilicate is at least one of fly ash, volcanic ash, and silica fume.

8. The solidified body according to any one of claims 1 to 7, wherein the water is at least one of fresh water, salt water, seawater, hot spring water, and an aqueous sodium hydroxide solution.

9. A roadbed material comprising the solidified body according to claim 1 in an amount of 1 mass % or more.

10. A method for manufacturing a solidified body, comprising:

a kneading step of kneading a binder, at least one of a carbonated steelmaking slag, a wood material, a synthetic resin, and natural fibers, and water to form a mixture; and
a solidification step of molding and solidifying the mixture,
wherein in the kneading step, the materials are mixed and kneaded such that the content of the at least one of a carbonated steelmaking slag, a wood material, a synthetic resin, and natural fibers is not less than 1 mass % and not more than 90 mass %.

11. The method for manufacturing a solidified body according to claim 10, wherein in the kneading step, the materials are mixed and kneaded such that the mass ratio of the water to the binder is not less than 0.1 and not more than 0.7.

## INTERNATIONAL SEARCH REPORT

| International application No. |
| --- |
| **PCT/JP2023/040880** |

| A. | CLASSIFICATION OF SUBJECT MATTER |
| --- | --- |

*C04B 28/02*(2006.01)i; *C04B 16/02*(2006.01)i; *C04B 18/14*(2006.01)i; *C04B 18/16*(2023.01)i; *C04B 18/20*(2006.01)i; *C04B 22/06*(2006.01)i; *C04B 22/08*(2006.01)i
FI: C04B28/02; C04B16/02 Z; C04B18/14 A; C04B18/14 F; C04B18/16; C04B18/20; C04B22/06 Z; C04B22/08 A

According to International Patent Classification (IPC) or to both national classification and IPC

| B. | FIELDS SEARCHED |
| --- | --- |

Minimum documentation searched (classification system followed by classification symbols)

C04B28/02; C04B16/02; C04B18/14; C04B18/16; C04B18/20; C04B22/06; C04B22/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2013-256779 A (OJI HOLDINGS CORPORATION) 26 December 2013 (2013-12-26) paragraphs [0006], [0023], [0032], example 6, table 1 | 1, 3-5, 8-11 |
| A | entire text, all drawings | 2, 6-7 |
| X | CN 112537914 A (HEBEI BOTIAN BUILDING MATERIAL TECHNOLOGY CO., LTD.) 23 March 2021 (2021-03-23) paragraphs [0003]-[0004], [0062]-[0065], example 4 | 1, 3-6, 8, 10 |
| A | entire text, all drawings | 2, 7, 9, 11 |
| X | JP 2008-030967 A (SUMITOMO OSAKA CEMENT CO., LTD.) 14 February 2008 (2008-02-14) paragraph [0040], example 1 | 1, 3, 5, 7-8, 10-11 |
| A | entire text, all drawings | 2, 4, 6, 9 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 January 2024** | **06 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
|---|
| **PCT/JP2023/040880** |

### C.    DOCUMENTS CONSIDERED TO BE RELEVANT

| Category* | Citation of document, with indication, where appropriate, of the relevant passages | Relevant to claim No. |
|---|---|---|
| X | JP 2000-095548 A (MATSUSHITA ELECTRIC WORKS, LTD.) 04 April 2000 (2000-04-04) paragraphs [0031], [0050], example 6, table 1 | 1, 3, 5-6, 8, 10-11 |
| A | entire text, all drawings | 2, 4, 7, 9 |
| X | JP 11-030008 A (KUBOTA CORP.) 02 February 1999 (1999-02-02) paragraph [0023], tables 2-3 | 1, 3, 5, 7-8, 10 |
| A | entire text, all drawings | 2, 4, 6, 9, 11 |
| X | US 2011/0017101 A1 (NGUYEN, Evelyne) 27 January 2011 (2011-01-27) paragraphs [0033], [0065]-[0066], [0085], table 9, mortar A | 1-2, 5, 8, 10-11 |
| A | entire text, all drawings | 3-4, 6-7, 9 |
| X | KR 10-1079705 B1 (DAEHO E&C CO., LIMITED COMPANY) 03 November 2011 (2011-11-03) paragraphs [0055], [0087]-[0092], example 1 | 1, 3, 5, 8, 10 |
| A | entire text, all drawings | 2, 4, 6-7, 9, 11 |
| Y | CN 112919834 A (SINOSTEEL MAANSHAN GENERAL INSTITUTE OF MINING RESEARCH CO., LTD.) 08 June 2021 (2021-06-08) paragraphs [0004]-[0005], [0012], [0039]-[0046], table 1, example 6 | 1-2, 5, 10-11 |
| A | entire text, all drawings | 3-4, 6-9 |
| Y | WO 2022/270516 A1 (JFE STEEL CORP.) 29 December 2022 (2022-12-29) paragraph [0040], fig. 2 | 1-2, 5, 10-11 |
| A | entire text, all drawings | 3-4, 6-9 |
| A | CN 113149530 A (SHANDONG UNIVERSITY) 23 July 2021 (2021-07-23) entire text, all drawings | 1-11 |

Form PCT/ISA/210 (second sheet) (July 2022)

**INTERNATIONAL SEARCH REPORT**
Information on patent family members

International application No.

**PCT/JP2023/040880**

| Patent document cited in search report | | | Publication date (day/month/year) | Patent family member(s) | Publication date (day/month/year) |
|---|---|---|---|---|---|
| JP | 2013-256779 | A | 26 December 2013 | (Family: none) | |
| CN | 112537914 | A | 23 March 2021 | (Family: none) | |
| JP | 2008-030967 | A | 14 February 2008 | (Family: none) | |
| JP | 2000-095548 | A | 04 April 2000 | (Family: none) | |
| JP | 11-030008 | A | 02 February 1999 | (Family: none) | |
| US | 2011/0017101 | A1 | 27 January 2011 | WO 2009/089906 A1<br>page 12, line 25 to page 13, line 9, page 17, line 24 to page 18, line 10, table 5, mortar A<br>CA 2712063 A1 | |
| KR | 10-1079705 | B1 | 03 November 2011 | (Family: none) | |
| CN | 112919834 | A | 08 June 2021 | (Family: none) | |
| WO | 2022/270516 | A1 | 29 December 2022 | TW 202317501 A<br>paragraph [0040], fig. 2 | |
| CN | 113149530 | A | 23 July 2021 | (Family: none) | |

Form PCT/ISA/210 (patent family annex) (July 2022)

**EP 4 631 925 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5263190 B